(19) **Europäisches Patentamt · European Patent Office · Office européen des brevets**

(11) **EP 4 232 262 B1**

(12) **EUROPEAN PATENT SPECIFICATION**

(45) Date of publication and mention
of the grant of the patent:
**08.01.2025   Bulletin 2025/02**

(21) Application number: **21799341.9**

(22) Date of filing: **21.10.2021**

(51) International Patent Classification (IPC):
**B29C 64/129** (2017.01)    **B29C 64/277** (2017.01)
**B29C 64/393** (2017.01)    **B33Y 10/00** (2015.01)
**B33Y 30/00** (2015.01)    **B33Y 50/02** (2015.01)

(52) Cooperative Patent Classification (CPC):
**B29C 64/129; B29C 64/277; B29C 64/393;
B33Y 10/00; B33Y 30/00; B33Y 50/02**

(86) International application number:
**PCT/IB2021/059731**

(87) International publication number:
**WO 2022/084921 (28.04.2022 Gazette 2022/17)**

(54) **A MULTI-SCALE SYSTEM FOR PROJECTION MICRO STEREOLITHOGRAPHY**

MEHRSKALIGES SYSTEM FÜR MIKROPROJEKTIONSSTEREOLITHOGRAPHIE

SYSTÈME MULTI-ÉCHELLES POUR LA MICRO-STÉRÉOLITHOGRAPHIE PAR PROJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **23.10.2020   US 202063104867 P**

(43) Date of publication of application:
**30.08.2023   Bulletin 2023/35**

(73) Proprietor: **BMF Material Technology Inc.
Shenzhen, Guangdong (CN)**

(72) Inventors:
 • **XIA, Chunguang
   San Diego, California 13583 (US)**
 • **XU, Jiawen
   Shenzhen, Guangdong (CN)**

(74) Representative: **Porta & Consulenti Associati
S.p.A.
Via Vittoria Colonna, 4
20149 Milano (IT)**

(56) References cited:
   CN-A- 112 549 537    JP-A- 2004 314 406
   JP-A- 2009 083 240    US-A1- 2017 334 142

**Description**

The present invention provides an improved method for faster printing over a larger-area with multiple projection lens without sacrificing the resolution available from existing micro stereolithography methods, a 3D printing technology. Embodiments which are part of the invention as claimed combine a dual-projection lens of $2\mu m$ and $10\mu m$ pixels with optical shutter control, which quickly switches the image projection between the lens, during large-area printing. The method-of the invention disclosed herein is not limited to a 3D printing system of layer coating by membrane; it is also valid for any other type of method using free surface coating, spray coating, or hard window coating.

BACKGROUND

Stereolithography was originally conceived as a rapid prototyping technology. Rapid prototyping refers to a family of technologies that are used to create true-scale models of production components directly from computer aided design (CAD) in a rapid (faster than before) manner. Since its disclosure in US 4,575,330, stereolithography has greatly aided engineers in visualizing complex three-dimensional part geometries, detecting errors in prototype schematics, testing critical components, and verifying theoretical designs at relatively low costs and in a faster time frame than before.

During the past decades, continuous investments in the field of micro-electromechanical systems (MEMS) have led to the emergence of micro-stereolithography ($\mu$SL), which inherits basic principles from traditional stereolithography but with much higher spatial resolution e.g., K. Ikuta and K. Hirowatari, "Real three dimensional micro fabrication using stereo lithography and metal molding," 6th IEEE Workshop on Micro Electrical Mechanical Systems, 1993. Aided by single-photon polymerization and two-photon polymerization techniques, the resolution of $\mu$SL was further enhanced to be less than 200 nm, e.g., S. Maruo and K. Ikuta, "Three-dimensional microfabrication by use of single-photon-absorbed polymerization," Appl. Phys. Lett., vol. 76, 2000; S. Maruo and S. Kawata, "Two-Photon-Absorbed Near-Infrared Photopolymerization for Three-dimensional Microfabrication," J. MEMS, vol. 7, pp. 411, 1998; S. Kawata, H. B. Sun, T. Tanaka and K. Takada, "Finer features for functional microdevices," Nature, vol. 412, pp. 697, 2001.

The speed was dramatically increased with the invention of projection micro-stereolithography (P$\mu$SL), Bertsch et al., "Microstereophotolithography using a liquid crystal display as dynamic mask-generator," Microsystem Technologies, p42-47, 1997; Beluze et al., "Microstereolithography: a new process to build complex 3D objects , Symposium on Design, Test and microfabrication of MEMs/MOEMs", Proceedings of SPIE, v3680, n2, p808-817,1999. The core of this technology is a high resolution spatial light modulator, which is either a liquid crystal display (LCD) panel or a digital light processing (DLP) panel, each of which are available from micro-display industries.

While P$\mu$SL technology has been successful in delivering fast fabrication speeds with good resolution, further improvements are still wanted.

US 2017/334142 A1, corresponding to the preamble of claim 1, describes a 3D printing method, where elementary volumes, or voxels, of a material are sequentially transformed by irradiation, comprising the steps of: breaking down the volume of a portion of an object to be printed which does not require a maximum resolution into identical blocks; for the printing, associating with each block a brick of same contour comprising hollow portions; and carrying out a succession of irradiations to print the voxels of the bricks, each irradiation providing an array of irradiation beams focused into an array of points distributed in the material in the same way for two successive irradiations, the array of points being offset in the material between two successive irradiations.

Due to the limitation of the physical size of the micro display chip, high resolution and large area printing are conflicting requirements. In the high-resolution printing, as the pixel size shrinks, the size of projection image proportionally scales down. Hence significantly reduce the printing speed.

In this invention a new method combines dual-projection lens of distinct pixel size with precision translation stage system to print faster than before over an area of 10cmX10cm.

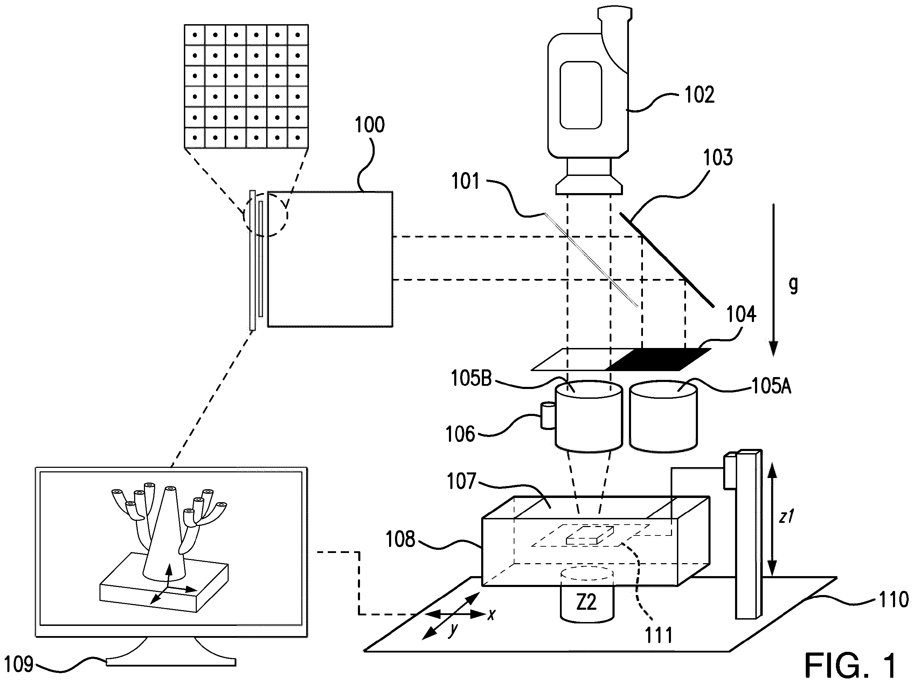

In all 3D printing technologies, accuracy and efficiency in dimension replication is very important. Therefore, in the Multi-scale Projection Micro Stereolithography (Figure 1) of the invention, it is very important to have high accuracy and efficiency in dimension control of layers, so that the actual CAD model can be duplicated in a practical period of time.

SUMMARY OF THE INVENTION

The method of the present invention, as recited in claim 1, provides more precise control, with greater speed and accuracy in a larger printing area, for example, 10cmX10cm printing area with a $2\mu m$ optical resolution. In an embodiment part of the invention as claimed, the present method uses a projection lens complex, in particular a dual projection lens, combined with a precision translation stage system. The method not only maintains the dimensional accuracy of samples printed using, e.g., P$\mu$SL systems, but also significantly improves the printing speed by combining projection lenses with different imaging ratios for areas with different feature details.

The dual projection lens comprises a higher resolution lens and a lower resolution lens, for example, lenses having image pixel size of 2μm and 10μm. The image from the micro display chip is delivered to both lenses of a dual projection lens using beam splitter and mirror. But each time, only one lens projects the current image at selected pixel size by controlling the optical shutters in front of the dual lens.

For example, in many embodiments part of the invention as claimed, the method makes use of a system comprising: i) an optical light engine, it can be a DLP or LCD with a light source for projection micro stereolithography, ii) a high precision camera to monitor the printing interface, iii) three precision stages to control the motion of the substrate for supporting the printing sample or the printing projection system in the X, Y, and Z directions, iv) a resin vat under the membrane where the parts are printed and v) a laser displacement sensor for monitoring the membrane position and the printing substrate position to ensure one micron accuracy. The system is arranged relative to a surface of a substrate, i.e., sample holder, or sample so that the lens is situated between the surface of the substrate and the light engine and it is gravitationally above the substrate.

In one embodiment part of the invention as claimed, with the aid from the XY stages, in a configuration for multi-scale PμSL, this invention provides three printing modes. When only a single sample needed, which is smaller than the single exposure size, it is called single exposure mode. If multiple samples are needed, the XY stages will move stepwise and print the same sample in an array, which is called array exposure mode. As the sample size increases to exceed the size of the single exposure, the system will further divide one layer into multiple sections and stitch the adjacent sections into a whole layer by overlapping 5μm to 30μm on the shared edges. This is the stitching exposure mode. It is also possible to combine the stitching mode with array mode. In each layer, no matter its size, the image is analyzed and small features (gaps, holes, steps, sharps et al) are detected. A rectangular window equal to the size of the 2μm resolution exposure is used to cover those tiny features. More windows can be added to cover all. The rest of the areas will be covered by 10μm resolution exposures. The stitch happens not only among section images of same resolution, but also among section images of different resolutions.

In another embodiment part of the invention as claimed, the least square fitting error curves based on the measured data from actual samples will be fed into the translation of the XY stages to compensate the mechanical tolerances to ensure the accuracy of the stitching-printed sample is within the specifications.

In various embodiments part of the invention as claimed, the substrate holding the sample is translated in the XY plane for stitching and array printing, with optics (DLP or /LCD panel and lens) fixed, however, translating the optics, or translating both the substrate and optics will serve the same purpose.

BRIEF DESCRIPTION OF THE DRAWINGS

Figure 1 is a schematic drawing of the multi-scale micro stereolithography system.
Figure 2 illustrates stitching errors in x and y direction during the stitch printing in the multi-scale micro stereolithography system.
Figure 3 shows the three printing modes in the multi-scale micro stereolithography system.
Figure 4 shows the printing sequence in a multi-scale micro stereolithography system.
Figure 5 shows the procedures of leveling a sample stage using a laser displacement sensor in the multi-scale PμSL system.

DISCUSSION OF THE INVENTION

According to the invention as claimed, the method is aided by a dual projection lens as in Figure 1, as part of the light engine/dual project lens/membrane/displacement system discussed above. The dual projection lens provides precision printing based on the local details of the printing part. It dramatically increases the precision printing time without sacrificing the resolution for very fine details by locally adapting the resolution as needed.

For the PμSL case, the printing process starts with generating a 3D model in the computer and then slicing the digital model into a sequence of images, wherein each image represents a layer (e.g., 5 to 20 micrometers) of the model. The control computer sends an image to the micro display chip, DLP or LCD, and the image is projected through the lens onto the bottom surface (the wet surface) of membrane. The bright areas of the projected image are polymerized whereas the dark areas remain liquid. As one layer is finished, the Z stage moves the sample substrate down about 2-3mm to peel off the membrane from the sample. As soon as the membrane is separated from the sample, the sample again moves up to the flat membrane position less the thickness of next layer, during this movement different techniques are applied to flatten the membrane and defining the next layer of printing material, typically a resin, such as a photo curable resin. The above procedures are repeated for the number of the layers until the whole model is replicated in the resin vat.

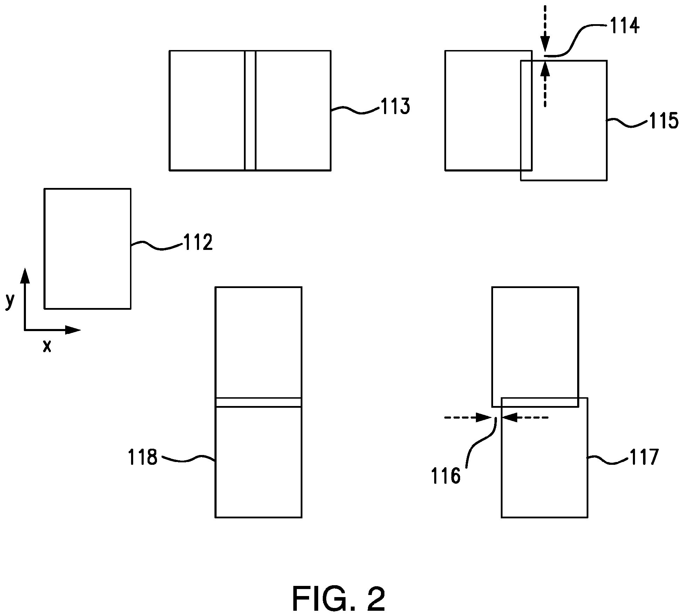

Due to the size limit of either LCD or DLP chip, for example a DLP chip with 1920X1080 pixels at 10um printing optical resolution, a single exposure will only cover area of 19.2mmX10.8mm. Therefore, if the cross-section of a sample is larger than 19.2mmX10.8mm, it cannot be printed with single exposure method. In the present invention, a multiple-exposure stitching printing method is provided. By this method, an image representing a layer of the 3D model is further divided into multiple smaller sub-images with each image no larger than the DLP pixel resolution. For instance, an image of pixel resolution of 3800X2000 can be divided into four 1900X1000 sub-images with each one represents a quarter of this layer. As a result, a full layer of the model will be printed section by section based on the sub-images. To improve the mechanical strength of the shared edges of the adjacent sections, there is typically about a 5-30 micron overlap on the edges. The precise position and the amount of overlap are accurately controlled by the XY stage assembly. There are two coordinate systems: one is aligned with the DLP/LCD panel, the other one is the XY stage assembly. When these two coordinate systems are not parallel due to the assembly tolerance, there will be offset errors on the shared edges of adjacent sections. As shown in Figure 2, A (112) is the size of a single exposure; B (118) is the result of precise alignment on x direction; C (117) is the result with error offset on x direction; B' (113) is the result of precise alignment on y direction; C' (115) is the result with error offset on y direction. In precision printing, with error requirements less than 10um, stage assembly tolerance is usually off the allowed range; and the offset is not linear to the stage travel distance. Therefore, in the invention, offsets are measured at 10 or more evenly distributed points on both X and Y directions on a full-range printed square sample. At least second order polynomial error curves on both X and Y directions are fitted to the measure data by the least square method.

$$XError\ (\ X_0, Y_0\ ) = C_1 + C_2 + C_3\ Y_0 + C_4\ X_0 Y_0 + C_5\ X_0^2 + C_6\ Y_0^2$$

$$YError\ (\ X_0, Y_0\ ) = D_1 + D_2 + D_3\ Y_0 + D_4\ X_0 Y_0 + D_5\ X_0^2 + D_6\ Y_0^2$$

Here Cs and Ds are polynomial coefficients calculated by the least square fitting method. These two error curves will be fed into the translation of the XY stages to compensate the offset thus ensure the accuracy of the stitching-printed sample is within the specifications. For example, the theoretical target is $(\ X_0, Y_0\ )$, then the actual executed translation commands are $(\ X_0 + XError\ (\ X_0, Y_0\ ), Y_0 + YError\ (\ X_0, Y_0\ )\ )$.

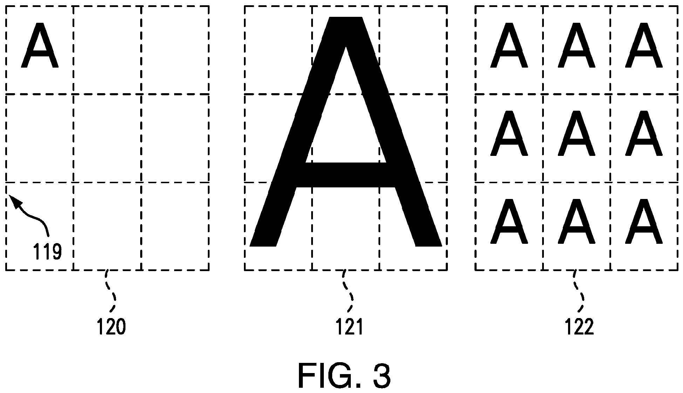

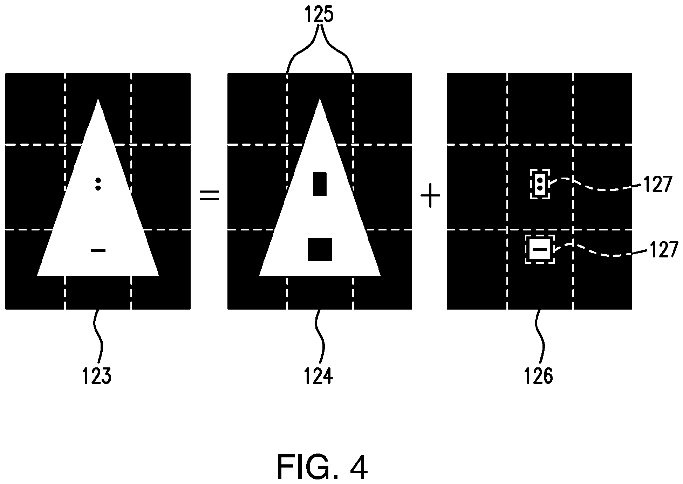

With the aid of the XY stages, the multi-scale $P\mu SL$ provides basically three printing modes (Figure 3). When printing a single sample, which is smaller than the single exposure size of the finest lens, $2\mu m$ in this invention, the XY stages will not move during printing. It is called single exposure mode. If multiple identical samples are needed, the XY states will move stepwise and print the same sample in an array. And this is called array exposure mode which is much faster for small volume production than repeating the single exposure mode. As the sample size increases to exceed the size of the single exposure or the sample needs multi-scale printing, the system will further divide one layer into multiple sections and stitch the adjacent sections into a whole layer by overlapping $5\mu m$ to $30\mu m$ on the shared edges. This is the stitching exposure mode. It is possible to combine the stitching mode with array mode when one needs multiple identical samples but needs stitching exposure as the sample is larger than single exposure. However, this case is usually treated as stitching exposure mode. Especially in the multi-scale printing (Figure 4), the layer image is analyzed and the small features ((gaps, holes, steps, sharps et al) are detected and isolated by windows of the $2\mu m$ single exposure. For each layer, the printer first scans and prints using $10\mu m$ exposures, then it alternates the shutter, reverses the scan and prints the isolated small features using $2\mu m$ exposures. The projection images of the small features have 5-30um deep overlaps with the surrounding $10\mu m$ images or $2\mu m$ images all around. The overlaps happen not only among $10\mu m$ images or $2\mu m$ images, also happen between $10\mu m$ and $2\mu m$ images.

A high-resolution lens typically has a very small focus depth, for example the focus depth of the $2\mu m$ lens is less than $10\mu m$. In printing, as the lens scans over the membrane, it is critical that the optical axis of both lenses are perpendicular to the membrane, such that the projected image will not be out of focus during the XY stage translation which impairs the printing resolution. Hence, a high accuracy laser displacement sensor with resolution of $1\mu m$ is integrated with the dual lens. The displacement sensor serves two purposes. One is to align one surface parallel to another. The other is to precisely define the gap between two parallel surfaces, such as the membrane and the printing substrate in this invention, by placing the surfaces in the laser defined position.

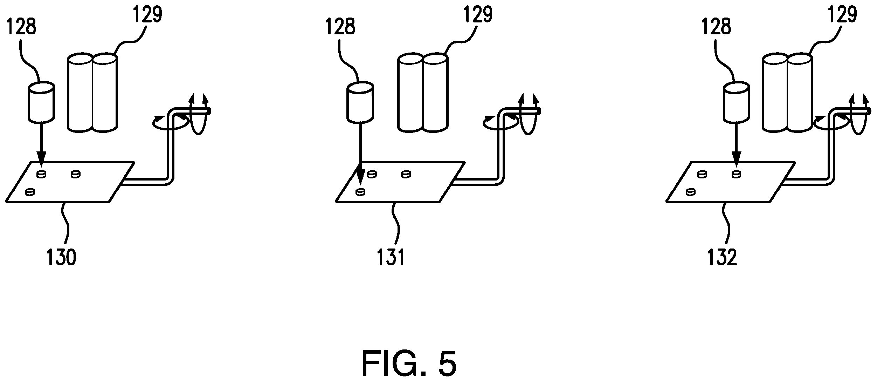

For example, the methods herein can be used as part of multi-scale $P\mu SL$ printing process to establish a resin free surface, membrane or hard window as parallel to the surface of a sample stage. As shown in Figure 5 for a multi-scale $P\mu SL$ printing system, three non-linear points, here forming the right-angle triangle shown, are selected on the sample stage surface and sequentially aligned with the displacement sensor emission vector by moving the XY stages. The minimum distances between the points should be 1 cm to guarantee good accuracy. The sample stage should be adjusted to make sure the distance readings between the displacement sensor and each point are the same. As the emission vector of the displacement sensor is parallel to the optical axis of both lens, proper controls of the system will provide a stages surface perpendicular to the emission vector of the displacement sensor and the optical axis of the lens. And it follows the same procedure to level the membrane such that the optical axis of both lenses is perpendicular to the membrane.

Referring now to Figure 1, it shows a schematic drawing of a multi-scale projection micro stereolithography system; including a digital light processing panel (DLP) and light source 100; beam splitter 101; charge coupled device (CCD) 102; mirror 103; shutter 104; dual lenses 105A (2 $\mu$m) and 105B (10 $\mu$m); laser displacement sensor 106; membrane 107; resin vat 108; video unit 109; xyz stage assembly 110; and sample substrate 111; where z1 and z2 are the z directions and g is the direction of gravity.

Referring now to Figure 2, it shows stitching error in the x and y directions during stitch printing in a multi scale projection micro stereo lithography system, including 112 as the size of a single exposure; 113 is the result of precise alignment on y direction; 115 is the result with error offset in y direction 114, 118 is the result of precise alignment on x direction; and 117 is the result with error offset in x direction 116. Referring now to Figure 3, it shows three exposure modes in a multi-scale projection micro stereolithography system, including printing borders 119, single exposure 120, stitching exposure 121, and array exposure 122. Referring now to Figure 4, it shows a printing sequence in a multi-scale stereolithography system, including layer image 123, 10 $\mu$m lens projection 124 with stich lines 125; and 2 $\mu$m lens projection 126 with stitch lines 127. Referring now to Figure 5, it shows the procedures of leveling a sample stage using a laser displacement sensor in the multi-scale P$\mu$SL system, including laser displacement sensor 128; dual lens 129; step 1 130; step 2 131; and step 3, 132.

## Claims

1. A method for fast, high resolution, 3D printing, the method comprising:

   generating on a computer a 3D digital model of a sample to be printed, slicing the digital model into a sequence of images, wherein each image of the sequence represents a layer of the 3D digital model, and transferring an image from the sequence of images to a micro display chip of an optical light engine (100) comprising the micro display chip and a light source, wherein the micro display chip comprises a liquid crystal display or a digital light processing panel,
   projecting the image along with light from the optical light engine (100) through a projection lens (105A) of a projection lens complex (105A, 105B) onto printing material (108),
   causing the printing material (108) in the bright areas of the projected image are polymerized, while the dark areas remain liquid, and
   the projection lens complex (105A, 105B) comprises two or more projection lenses with different imaging ratios, and wherein the image and light are projected through only one projection lens at a time, and
   wherein the projection lens complex is a dual-projection lens comprising two projection lenses with different imaging ratios, one lens having higher resolution and a second lens having lower resolution, wherein both lenses share the same focus plane by design,
   the method being **characterized in that** optical shutters (104) in front of the projection lenses (105A, 105B) are used to switch image projection from one projection lens to another projection lens.

2. The method according to claim 1, wherein the dual-projection lens comprises a higher resolution 2 $\mu$m projection lens (105A) and a lower resolution 10 $\mu$m projection lens (105B).

3. The method according to claim 1 or 2, wherein the layers are prepared through layer coating by membrane (107), free surface coating, spray coating, or hard window coating.

4. The method according to any one of claims 1 to 3, wherein each image represents a 5 to 20 micrometer layer of the model.

5. The method according to claim 3, wherein an optically clear membrane (107) is positioned between the printing material (108) and the projection lens complex (105A, 105B), wherein the membrane (107) has a bottom surface on a side away from the projection lens complex (105A, 105B), which bottom surface contacts the printing material (108) during exposure, and wherein the image and light from the light source of the optical light engine (100) is projected through a projection lens of the projection lens complex (105A, 105B), onto the bottom surface of the membrane (107) to cure the printing material layer (108), and as one layer is finished, a substrate (111) for holding the sample is moved away from the membrane thus separating the membrane (107) from the sample, after which the sample is moved back toward the membrane (107) and positioned at a distance away from the membrane equal to the thickness of next layer to be printed, during which positioning the membrane is flattened to define the next layer of printing material (108).

6. The method according to any one of claims 1 through 5, further comprising analyzing the image of the layer to be printed to detect small features which are isolated by windows of a higher resolution exposure, scanning and printing the layer using the projection lens (105B) providing lower resolution exposures, followed by alternating the optical shutter (104), reversing the scan and printing the isolated small features using the projection lens (105A) providing the higher resolution exposures.

7. The method according to any one of claims 1 through 6 for printing a layer of a 3D digital model, or a single layer model, wherein the layer has a size exceeding a size of a single image exposure, the method further comprising dividing the layer into multiple sections, and printing the sections so that shared edges of adjacent sections overlap by $5\mu$m to $30\mu$m and stitch the sections into a single whole layer.

8. The method according to any one of claims 1 to 7, wherein motion of the substrate (111) for supporting the printing sample and / or the printing projection system in the X, Y, and Z directions is controlled by three precision stages.

9. The method according to claim 8, for stitching and array printing, wherein the substrate (111) holding the sample is translated in the XY plane while the optics comprises the micro display chip and projection lens, are fixed; translating the optics while holding the substrate (111) holding the sample fixed, or translating both the substrate (111) holding the sample and the optics.

10. The method according to any one of claims 1 to 9 wherein least square fitting error curves based on measured data from actual printing samples are fed into the translation of the XY stages to compensate for mechanical tolerances to ensure the accuracy of the stitching-printed sample is within the specifications.

11. The method according to any one of claims 1 to 10, wherein the printing material (108) is a photo-curable resin.

**Patentansprüche**

1. Verfahren zum schnellen, hochauflösenden 3D-Drucken, wobei das Verfahren umfasst:

Erzeugen eines digitalen 3D-Modells eines zu druckenden Testkörpers auf einem Computer, Zerschneiden des digitalen Modells in eine Sequenz von Bildern, wobei jedes Bild der Sequenz eine Schicht des digitalen 3D-Modells darstellt, und Übertragen eines Bildes aus der Sequenz von Bildern auf einen Mikroanzeigechip einer optischen Lichtmaschine (100), die den Mikroanzeigechip und eine Lichtquelle umfasst, wobei der Mikroanzeigechip eine Flüssigkristallanzeige oder eine digitale Lichtverarbeitungsplatte umfasst,
Projizieren des Bildes zusammen mit Licht von der optischen Lichtmaschine (100) durch eine Projektionslinse (105A) eines Projektionslinsenkomplexes (105A, 105B) auf Druckmaterial (108),
Bewirken, dass das Druckmaterial (108) in den hellen Bereichen des projizierten Bildes polymerisiert wird, während die dunklen Bereiche flüssig bleiben, und
der Projektionslinsenkomplex (105A, 105B) zwei oder mehr Projektionslinsen mit unterschiedlichen Abbildungsverhältnissen umfasst, und wobei das Bild und das Licht jeweils nur durch eine Projektionslinse projiziert werden, und
wobei der Projektionslinsenkomplex eine Doppelprojektionslinse ist, die zwei Projektionslinsen mit unterschiedlichen Abbildungsverhältnissen umfasst,
wobei eine Linse eine höhere Auflösung und eine zweite Linse eine niedrigere Auflösung aufweist, wobei beide Linsen konstruktionsbedingt dieselbe Fokusebene teilen,
wobei das Verfahren **dadurch gekennzeichnet ist, dass** optische Blenden (104) vor den Projektionslinsen (105A, 105B) verwendet werden, um die Bildprojektion von einer Projektionslinse auf eine andere Projektionslinse umzuschalten.

2. Verfahren nach Anspruch 1, wobei die Doppelprojektionslinse eine höher auflösende 2 $\mu$m-Projektionslinse (105A) und eine niedriger auflösende 10 $\mu$m-Projektionslinse (105B) umfasst.

3. Verfahren nach Anspruch 1 oder 2, wobei die Schichten durch Schichtbeschichtung mit einer Membran (107), freie Oberflächenbeschichtung, Sprühbeschichtung oder Beschichtung mit harten Fenstern hergestellt werden.

4. Verfahren nach einem der Ansprüche 1 bis 3, wobei jedes Bild eine 5 bis 20 Mikrometer dicke Schicht des Modells darstellt.

5. Verfahren nach Anspruch 3, wobei eine optisch klare Membran (107) zwischen dem Druckmaterial (108) und dem Projektionslinsenkomplex (105A, 105B) angeordnet ist, wobei die Membran (107) eine untere Oberfläche auf einer von dem Projektionslinsenkomplex (105A, 105B) abgewandten Seite aufweist, wobei die untere Oberfläche das Druckmaterial (108) während der Belichtung berührt, und wobei das Bild und das Licht von der Lichtquelle der optischen Lichtmaschine (100) durch eine Projektionslinse des Projektionslinsenkomplexes (105A, 105B) auf die untere Oberfläche der Membran (107) projiziert wird, um die Druckmaterialschicht (108) auszuhärten, und wenn eine Schicht fertig ist, ein Substrat (111) zum Halten des Testkörpers von der Membran wegbewegt wird, wodurch die Membran (107) von dem Testkörper getrennt wird, wonach der Testkörper zurück zur Membran (107) bewegt und in einem Abstand von der Membran angeordnet wird, der gleich der Dicke der nächsten zu druckenden Schicht ist, wobei während dieser Anordnung die Membran abgeflacht wird, um die nächste Schicht des Druckmaterials (108) zu definieren.

6. Verfahren nach einem der Ansprüche 1 bis 5, ferner umfassend das Analysieren des Bildes der zu bedruckenden Schicht, um kleine Merkmale zu erkennen, die durch Fenster einer Belichtung mit höherer Auflösung isoliert sind, das Abtasten und Drucken der Schicht unter Verwendung der Projektionslinse (105B), die Belichtungen mit niedrigerer Auflösung liefert, gefolgt von einem Wechsel der optischen Blende (104), einer Umkehrung der Abtastung und einem Drucken der isolierten kleinen Merkmale unter Verwendung der Projektionslinse (105A), die die Belichtungen mit höherer Auflösung liefert.

7. Verfahren nach einem der Ansprüche 1 bis 6 zum Drucken einer Schicht eines digitalen 3D-Modells oder eines Einzelschichtmodells, wobei die Schicht eine Größe aufweist, die die Größe einer einzelnen Bildbelichtung übersteigt, wobei das Verfahren ferner das Unterteilen der Schicht in mehrere Abschnitte und das Drucken der Abschnitte in der Weise umfasst, dass sich gemeinsame Kanten benachbarter Abschnitte um 5 μm bis 30 μm überlappen und die Abschnitte zu einer einzigen Gesamtschicht gestitcht werden.

8. Verfahren nach einem der Ansprüche 1 bis 7, wobei die Bewegung des Substrats (111) zum Tragen des Drucktestkörpers und/oder des Druckprojektionssystems in X-, Y- und Z-Richtung durch drei Präzisionstische gesteuert wird.

9. Verfahren nach Anspruch 8 zum Stitching und Array-Drucken, wobei das Substrat (111), das den Testkörper hält, in der XY-Ebene verschoben wird, während die Optik, die den Mikroanzeigechip und die Projektionslinse umfasst, fixiert wird; Verschieben der Optik, während das Substrat (111), das den Testkörper hält, fixiert wird, oder Verschieben sowohl des Substrats (111), das den Testkörper hält, als auch der Optik.

10. Verfahren nach einem der Ansprüche 1 bis 9, wobei Fehlerkurven der kleinsten quadratischen Anpassung, die auf gemessenen Daten von tatsächlichen Drucktestkörpern basieren, in die Verschiebung der XY-Tische eingespeist werden, um mechanische Toleranzen zu kompensieren und so sicherzustellen, dass die Genauigkeit des stitchgedruckten Testkörpers innerhalb der Spezifikationen liegt.

11. Verfahren nach einem der Ansprüche 1 bis 10, wobei das Druckmaterial (108) ein lichthärtendes Harz ist.

## Revendications

1. Procédé d'impression 3D rapide et à haute résolution, comprenant :

   générer sur un ordinateur un modèle numérique 3D d'un échantillon à imprimer, découper le modèle numérique en une séquence d'images, chaque image de la séquence représentant une couche du modèle numérique 3D, et transférer une image de la séquence d'images vers une puce de micro-affichage d'un moteur optique de lumière (100) comprenant la puce de micro-affichage et une source de lumière, la puce de micro-affichage comprenant un écran à cristaux liquides ou un panneau de traitement numérique de la lumière,
   projeter l'image avec la lumière provenant du moteur optique (100) à travers une lentille de projection (105A) d'un complexe de lentilles de projection (105A, 105B) sur le matériau d'impression (108),
   provoquer la polymérisation du matériau d'impression (108) dans les zones claires de l'image projetée, tandis que les zones sombres restent liquides, et
   le complexe de lentilles de projection (105A, 105B) comprend deux lentilles de projection ou plus avec des rapports d'imagerie différents, et dans lequel l'image et la lumière sont projetées à travers une seule lentille de projection à la fois, et
   dans lequel le complexe de lentilles de projection est une lentille à double projection comprenant deux lentilles de projection avec des rapports d'imagerie différents, une lentille ayant une résolution plus élevée et une seconde lentille ayant une résolution plus faible, les deux lentilles partageant le même plan de mise au point de par leur conception,

le procédé est **caractérisé par** l'utilisation d'obturateurs optiques (104) devant les lentilles de projection (105A, 105B) pour faire passer la projection de l'image d'une lentille de projection à une autre.

2. Procédé selon la revendication 1, dans lequel la lentille à double projection comprend une lentille de projection à haute résolution de 2 $\mu$m (105A) et une lentille de projection à basse résolution de 10 $\mu$m (105B).

3. Procédé selon la revendication 1 ou 2, dans lequel les couches sont préparées par revêtement par membrane (107), revêtement à surface libre, revêtement par pulvérisation ou revêtement par fenêtre dure.

4. Procédé selon l'une des revendications 1 à 3, dans lequel chaque image représente une couche de 5 à 20 micromètres du modèle.

5. Procédé selon la revendication 3, dans lequel une membrane optiquement claire (107) est placée entre le matériau d'impression (108) et le complexe de lentilles de projection (105A, 105B), dans lequel la membrane (107) a une surface inférieure sur un côté opposé au complexe de lentilles de projection (105A, 105B), dont la surface inférieure est en contact avec le matériau d'impression (108) pendant l'exposition, et dans lequel l'image et la lumière provenant de la source lumineuse du moteur optique (100) sont projetées à travers une lentille de projection du complexe de lentilles de projection (105A, 105B), sur la surface inférieure de la membrane (107) pour durcir la couche de matériau d'impression (108), et lorsqu'une couche est terminée, un substrat (111) destiné à contenir l'échantillon est éloigné de la membrane, séparant ainsi la membrane (107) de l'échantillon, après quoi l'échantillon est ramené vers la membrane (107) et positionné à une distance de la membrane égale à l'épaisseur de la couche suivante à imprimer, pendant ce positionnement, la membrane est aplatie pour définir la couche suivante de matériau d'impression (108).

6. Procédé selon l'une des revendications 1 à 5, comprenant en outre l'analyse de l'image de la couche à imprimer pour détecter les petites caractéristiques qui sont isolées par les fenêtres d'une exposition à plus haute résolution, le balayage et l'impression de la couche à l'aide de la lentille de projection (105B) fournissant des expositions à plus basse résolution, suivis de l'alternance de l'obturateur optique (104), de l'inversion du balayage et de l'impression des petites caractéristiques isolées à l'aide de la lentille de projection (105A) fournissant les expositions à plus haute résolution.

7. Procédé selon l'une des revendications 1 à 6 pour l'impression d'une couche d'un modèle numérique 3D, ou d'un modèle à couche unique, dans lequel la couche a une taille supérieure à celle d'une exposition d'image unique, la méthode comprenant en outre la division de la couche en plusieurs sections, et l'impression des sections de sorte que les bords partagés des sections adjacentes se chevauchent de 5 $\mu$m à 30 $\mu$m et l'assemblage des sections en une seule couche entière.

8. Procédé selon l'une des revendications 1 à 7, dans lequel le mouvement du substrat (111) pour soutenir l'échantillon d'impression et/ou le système de projection d'impression dans les directions X, Y et Z est contrôlé par trois étages de précision.

9. Procédé selon la revendication 8, pour l'assemblage et l'impression de réseaux, dans laquelle le substrat (111) contenant l'échantillon est déplacé dans le plan XY tandis que l'optique comprend la puce de micro-affichage et la lentille de projection, sont fixes ; déplacement de l'optique tout en maintenant le substrat (111) contenant l'échantillon fixe, ou déplacement à la fois du substrat (111) contenant l'échantillon et de l'optique.

10. Procédé selon l'une des revendications 1 à 9, dans lequel les courbes d'erreur d'ajustement des moindres carrés basées sur des données mesurées à partir d'échantillons d'impression réels sont introduites dans la translation des étages XY pour compenser les tolérances mécaniques afin de garantir que la précision de l'échantillon imprimé par piqûre est conforme aux spécifications.

11. Procédé selon l'une des revendications 1 à 10, dans lequel le matériau d'impression (108) est une résine photo-polymérisable.

FIG. 1

EP 4 232 262 B1

FIG. 2

FIG. 3

FIG. 4

FIG. 5

EP 4 232 262 B1

**REFERENCES CITED IN THE DESCRIPTION**

**Patent documents cited in the description**

- US 4575330 A

- US 2017334142 A1

**Non-patent literature cited in the description**

- **K. IKUTA** ; **K. HIROWATARI**. Real three dimensional micro fabrication using stereo lithography and metal molding. *6th IEEE Workshop on Micro Electrical Mechanical Systems*, 1993
- **S. MARUO** ; **K. IKUTA**. Three-dimensional micro-fabrication by use of single-photon-absorbed poly-merization. *Appl. Phys. Lett.*, 2000, vol. 76
- **S. MARUO** ; **S. KAWATA**. Two-Photon-Absorbed Near-Infrared Photopolymerization for Three-dimen-sional Microfabrication. *J. MEMS*, 1998, vol. 7, 411

- **S. KAWATA** ; **H. B. SUN** ; **T. TANAKA** ; **K. TAKADA**. Finer features for functional microdevices. *Nature*, 2001, vol. 412, 697
- **BERTSCH et al.** Microstereophotolithography using a liquid crystal display as dynamic mask-generator. *Microsystem Technologies*, 1997, 42-47
- **BELUZE et al.** Microstereolithography: a new process to build complex 3D objects , Symposium on Design, Test and microfabrication of MEMs/MOEMs. *Proceedings of SPIE*, 1999, vol. 3680 (2), 808-817